# EUROPÄISCHE PATENTSCHRIFT

(11) **EP 2 326 538 B1**
(45) Veröffentlichungstag und Bekanntmachung des Hinweises auf die Patenterteilung: **20.03.2013**
(21) Anmeldenummer: 09778989.5
(22) Anmeldetag: 29.01.2009
(51) Int. Cl.: B60S 1/40, B60S 1/38

(54) **ANSCHLUSSVORRICHTUNG ZUM GELENKIGEN VERBINDEN EINES WISCHBLATTS MIT EINEM WISCHARM**
CONNECTING DEVICE FOR THE ARTICULATED CONNECTION OF A WIPER BLADE TO A WIPER ARM
DISPOSITIF DE RACCORDEMENT PERMETTANT DE REALISER UNE LIAISON ARTICULEE ENTRE UN BALAI D'ESSUIE-GLACE ET UN BRAS D'ESSUIE-GLACE

(30) Priorität: 13.09.2008 DE 102008047252
(43) Veröffentlichungstag der Anmeldung: 01.06.2011
(73) Patentinhaber: Robert Bosch GmbH, 70442 Stuttgart (DE)
(72) Erfinder: DEPONDT, Helmut, B-3001 Heverlee (BE); JANSSIS, Yves, B-3800 Sint-Truiden (BE); HERINCKX, Dirk, B-3350 Dries-Linter (BE)
(86) Internationale Anmeldenummer: PCT/EP2009/051005
(87) Internationale Veröffentlichungsnummer: WO 2010/028866

(56) Entgegenhaltungen:
- EP-A- 1 849 666
- WO-A-2006/106006
- DE-U1-202005 021 307
- GB-A- 2 424 824
- US-A1- 2005 177 970

## Beschreibung

### Stand der Technik

Die Erfindung geht von einer Anschlussvorrichtung zum gelenkigen Verbinden eines Wischblatts mit einem Wischarm nach dem Oberbegriff des Anspruchs 1 aus.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist und ein Lagerelement aufweist, auf dem oder in dem ein mit dem Wischarm fest verbundenes Lagerelement schwenkbar gelagert ist und gegebenenfalls ein oder mehrere Zwischenstücke, durch die die Anschlussmöglichkeiten des Anschlusselements auf die Aufnahmeeinrichtungen des Verbindungselements des Wischarms abgestimmt werden können. Diese Verbindungsstücke sind für alle Anwendungsmöglichkeiten der Anschlussvorrichtung unterschiedlich. Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelock-Prinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Eine andere Anschlussvorrichtung zum gelenkigen Verbinden eines Wischblatts mit einem Wischarm ist aus der DE 103 47 637 A1 bekannt. Hierbei besitzt ein Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist ein Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in ein zum Wischblatt hin offenes Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Hierzu dient eine Taste, die am Ende einer Federzunge in einer Deckwand des Adapters vorgesehen ist und im montierten Zustand in ein passendes Rastloch einer Deckwand des Verbindungselements einrastet.

Aus der DE 10 2006 031 514 A1 ist ein Wischblatt für Scheiben von Kraftfahrzeugen bekannt, das im mittleren Bereich ein Anschlusselement zum gelenkigen Verbinden mit einem Wischarm aufweist. Das Anschlusselement umfasst ein Grundelement, das aus zwei Seitenteilen zusammengesetzt ist, die einander zugewandte offene Längsnuten aufweisen. Mit diesen sitzen sie auf als Tragelement dienenden Federschienen, die in seitlichen Längsnuten einer Wischleiste teilweise eingebettet sind und zumindest im Bereich des Anschlusselements ein Stück weit seitlich aus den Längsnuten vorstehen. Die Längsnuten des Grundelements werden nach unten durch einen unteren Schenkel und nach oben durch einen oberen Schenkel begrenzt. An den oberen Schenkel ist in einem Endbereich ein Vorsprung und im anderen Endbereich eine Aussparung angeordnet, die jeweils zum gegenüberliegenden Seitenteil gerichtet sind. Der Vorsprung des einen Seitenteils passt in die Aussparung des anderen Seitenteils und umgekehrt. In montiertem Zustand fixieren die Vorsprünge in den Aussparungen die Seitenteile in Längsrichtung zueinander und definieren den Abstand der Längsnuten quer zum Wischblatt. Auf einer Seite eines jeden Vorsprungs bzw. einer jeden Aussparung befinden sich jeweils zwei zur Längsrichtung geneigt verlaufende Anlageflächen, wobei die Anlageflächen an dem Vorsprung eine konvexe Dachfläche bilden, die in eine konkave Dachfläche passt, die von den Anlageflächen an den Aussparungen gebildet wird. Somit sind die Seitenteile in Richtung der Hochachse verriegelt.

Auf der den Anlageflächen gegenüberliegenden Seiten der Aussparung ist ein Rasthaken vorgesehen, der bei der Montage in eine Rastvertiefung an dem Vorsprung des jeweils anderen Seitenteils einrastet. Die Vorsprünge und die zugeordneten Aussparungen mit den zugehörigen Anlageflächen und Rasthaken bilden einen Führungsblock, der in eine Aussparung in einem Boden einer Blechkralle eingreift. Die Blechkralle, die das eigentliche Anschlussteil bildet, umfasst die Seitenteile von außen mit Füßen, die vom Boden aus abgewinkelt sind. Zu den Enden Blechkralle sind an den Füßen längs gerichtete Laschen angeformt, die bei der Montage in entsprechende Nischen des Grundelements umgebogen werden. Zwischen den Füßen sind vom Boden aus in entgegengesetzter Richtung Seitenwände um etwa 90 Grad umgebogen. Die Seitenwände tragen als Gelenkteil einen Lagerstift, der mit den Seitenwänden vernietet ist.

US-A-2005/177970 offenbart den Oberbegriff des Anspruchs 1.

### Offenbarung der Erfindung

Nach der Erfindung besitzt der Adapter an seinem antriebsseitigen Ende oberhalb des Federbügels eine Taste, die über eine Federzunge mit dem Adapter verbunden ist und über die oberen Kanten der Seitenwände vorsteht. Die Seitenwände besitzen an ihren unteren Längskanten jeweils eine seitlich vorstehende Führungsschiene, an der ein Anschlag vorgehen ist. Damit ist die erfindungsgemäße Anschlussvorrichtung mit den gleichen Bauteilen für zwei verschiedene Wischarme bzw. Verbindungselemente geeignet.

Der erste Wischarm besitzt an seiner Frontstirnseite eine Lasche, mit der er in einer Aussparung am freien Ende des Adapters gehalten wird, während er durch Vorsprünge mit Hinterschneidungen an seinen Seitenwänden an den Rastnocken eines Federbügels des Adapters fixiert wird. Dabei verläuft der Wischarm, der nach dem Toplock-Prinzip mit dem Wischblatt verbunden ist, oberhalb des Wischblatts. Ferner ist ein Anschluss an einen Wischarm möglich, der ebenfalls nach dem Toplock-Prinzip mit dem Wischblatt verbunden ist, bei dem jedoch der Wischarm seitlich versetzt zum Wischblatt verläuft. Hierbei unterfasst das Verbindungselement mit seitlich nach innen vorspringenden Kanten an den Seitenwänden die Führungsschienen des Adapters, wobei die Stirnflächen der Kanten an einem Anschlag der Führungsschienen des Adapters zur Anlage kommen, wenn die Taste in eine Rastöffnung in einer Deckwand des Verbindungselements einrastet. Damit sich die Taste nicht unbeabsichtigt löst, ist es zweckmäßig, dass sie zum freien Ende des Adapters hin eine Hohlkehle aufweist, in der die Vorderkante der Rastöffnung einrastet.

Nach einer Ausgestaltung der Erfindung besitzen die Rastnocken jeweils zwei Anschlagflächen, von denen die dem Tragelement zugewandte, erste Anschlagfläche unter einem spitzen Winkel geneigt zu diesem verläuft, während die zweite Anschlagfläche an die erste Anschlagfläche anschließt und etwa senkrecht zum Tragelement verläuft. Mit einer derartigen Ausgestaltung kann zusätzlich ein weiterer Wischarmtyp mit der gleichen erfindungsgemäßen Anschlussvorrichtung an einem Wischblatt angeschlossen werden. Dieser Wischarm wird ebenfalls durch eine Lasche in der Aussparung des Adapters gehalten, während eine zweite Lasche, die an einer antriebsseitigen Kante einer Öffnung in der Deckwand des Verbindungselements angeformt ist, einen Steg im Bereich der Taste des und Adapters untergreift, während die vordere Kante der Öffnung mit der Hohlkehle der Taste verrastet. Gleichzeitig greifen die zweiten Anschlagflächen hinter Vorsprünge an den Seitenwänden des Verbindungselements, deren Flanken etwa senkrecht zum Tragelement verlaufen.

Zweckmäßigerweise wird gemäß einer Ausgestaltung der Erfindung die Aussparung am frontseitigen Ende des Adapters durch ein Füllstück geschlossen, das über eine Federzunge mit einer Deckwand des Adapters verbunden ist. Bei der Montage kann die Federzunge durch die Lasche an der vorderen Stirnwand des Verbindungselements zurückgedrückt werden, sodass die Lasche in die Aussparung gleiten kann.

Nach einer weiteren Ausgestaltung der Erfindung wird vorgeschlagen, dass das Gelenkteil ein Lagerbolzen mit einer Lagerbohrung ist. Auf dem äußeren Umfang des Gelenkteils, das ein Stück weit seitlich über den Gelenkteilträger vorsteht, ist der Adapter mittels Lageröffnungen in seinen Seitenwänden gelagert, während die Lagerbohrung des Gelenkteils den Anschluss eines Wischarms nach dem Sidelock-Prinzip ermöglicht, bei dem ein Gelenkstift, der seitlich des Verbindungselements angeordnet ist, in der Lagerbohrung des Gelenkteils gelagert wird, während eine mit dem Verbindungselement fest verbundene Brücke mit ihrem abgewinkelten Ende den Adapter übergreift. Aus optischen Gründen wird hierbei zweckmäßigerweise eine Adapterkappe verwendet, die auf den Adapter aufgesetzt und zwischen den Anschlag an den Führungsschienen des Adapters und der Taste fixiert ist, die in einer Rastöffnung in der Deckwand der Adapterkappe verrastet ist. Die Abdeckkappe besitzt in einer ihrer Seitenwände eine Nische für das abgewinkelte Ende der Brücke des Verbindungselements, während in der gegenüberliegenden Seitenwand eine Lageröffnung für den Gelenkstift vorgesehen ist.

Das Anschlussteil ist zweckmäßigerweise aus Kunststoff gefertigt. An der Außenseite seiner Deckwand ist dabei ein Gelenkteilträger angeformt, der einstückig mit dem Gelenkteil verbunden ist. Die Dicke des Gelenkteilträgers ist auf den Abstand der Seitenwände des Adapters abgestimmt, sodass der Gelenkteilträger im Adapter seitlich geführt ist, während dieser auf den Überständen des Gelenkteils schwenkbar gelagert ist. Das Anschlussteil besitzt außerdem an den Innenseiten seiner Seitenwände Rastnocken, die in Nischen an den Außenseiten der Seitenteile des Grundelements passen. Dadurch ist das Anschlussteil auf dem Grundelement fixiert. Gleichzeitig können an den Stirnseiten des Anschlussteils Anschlussprofile für Spoilerteile vorgesehen sein, mit denen das Wischblatt ausgerüstet sein kann.

Um die Anschlussvorrichtung sicher am Wischblatt zu befestigen und trotzdem leicht montieren zu können, ist das Grundelement zweckmäßigerweise in Längsrichtung geteilt, wobei die Seitenteile mit ihren einander zugewandten Längsnuten auf dem Tragelement sitzen, sodass das Anschlussteil die Seitenteile seitlich umfasst und zusammenhält. Um die Montage des Anschlussteils zu erleichtern, kann es zweckmäßig sein, dass die Seitenteile des Grundelements im Bereich ihrer Enden jeweils durch einen Rasthaken zusammengehalten werden, der in eine Rastvertiefung des anderen Seitenteils eingreift.

Gemäß einer weiteren Ausgestaltung der Erfindung wird vorgeschlagen, dass das Anschlussteil als Blechkralle ausgebildet ist. Dies ist ein bewährtes Bauelement sowohl bezüglich seiner Festigkeit als auch Haltbarkeit. Die Blechkralle umfasst mit ihren Füßen seitlich das Grundelement und greift mit in Längsrichtung zu den Enden des Anschlussteils gerichtete Laschen in die Nischen an den Außenseiten des Grundelements ein. Das Anschlussteil besitzt zwei parallel in Längsrichtung verlaufende Seitenwände, in deren Seitenöffnungen das Gelenkteil als Lagerbolzen mit einer Lagerbohrung eingesetzt ist und zu beiden Seiten ein Stück weit vorsteht. Bei der Verwendung einer Blechkralle ist es aus optischen Gründen vorteilhaft, dass auf das Grundelement oder das Anschlussteil eine Verkleidung geklippst ist, die an ihren Stirnseiten Anschlussprofile für Spoilerteile aufweist.

Auch bei dieser Ausführung ist es möglich, einen Wischarm nach dem Sidelock-Prinzip zu verwenden. Hierfür umfasst die Anschlussvorrichtung eine Adapterkappe, die an einer Seitenwand eine Nische besitzt, während in der anderen Seitenwand eine Lageröffnung vorgesehen ist. Die Adapterkappe schließt zweckmäßigerweise an die Verkleidung an, wobei sie zweckmäßigerweise an der zum freien Ende hinweisenden Stirnseite Flügel hat, die in die Verkleidung eingreifen. Dabei kann ein optisch geschlossenes Design erzielt werden, wenn die Adapterkappe im Bereich der Taste eine Ausbuchtung besitzt, die die Taste außen abdeckt.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1 -: in perspektivischer Ansicht eine Zusammenstellung von Enden bzw. Verbindungselemente von vier verschiedenen Wischarmen und einer erfindungsgemäßen Anschlussvorrichtung,
- Fig. 2: eine perspektivische Teilansicht in Richtung eines Pfeils II in Fig. 1 während der Montage,
- Fig. 3: eine perspektivische Ansicht einer erfindungsgemäßen Anschlussvorrichtung in Explosionsdarstellung,
- Fig. 4: eine vergrößerte Seitenansicht eines Anschlusselements schräg von unten im Bereich eines Gelenkteils,
- Fig. 5: eine perspektivische Ansicht einer Anschlussvorrichtung während der Montage eines ersten Wischarms,
- Fig. 6: eine perspektivische Ansicht einer Anschlussvorrichtung während der Montage eines zweiten Wischarms,
- Fig. 7: eine perspektivische Ansicht einer Anschlussvorrichtung während der Montage eines dritten Wischarms,
- Fig. 8: eine perspektivische Ansicht einer Anschlussvorrichtung während der Montage eines vierten Wischarms,
- Fig. 9: eine Alternative zu Fig. 3 und
- Fig. 10: ein Adapter entsprechend der Fig. 9 in vergrößertem Maßstab aus einer anderen Perspektive.

### Ausführungsformen der Erfindung

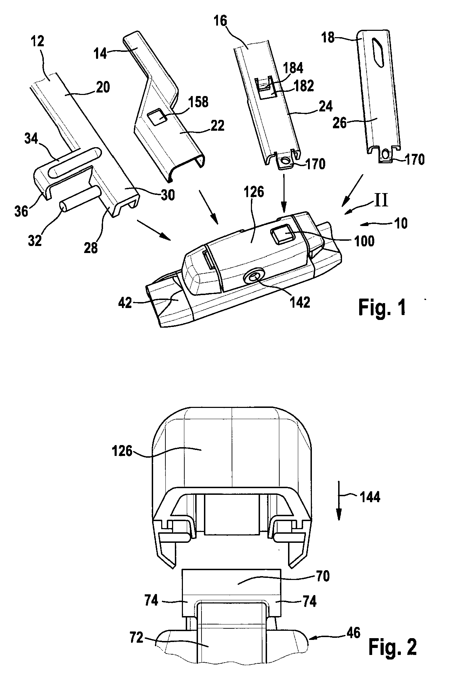

In der Zusammenstellung nach Fig. 1 ist eine Anschlussvorrichtung 10 dargestellt, die mit vier unterschiedlichen Wischarmen kombiniert werden kann, und zwar mit einem ersten Wischarm 12, der an seinem Ende ein Verbindungselement 20 für eine Sidelock-Verbindung besitzt, mit einem zweiten Wischarm 14 mit einem Verbindungselement 22 für eine Toplock-Verbindung, mit einem dritten Wischarm 16 mit einem Verbindungselement 24 für eine Toplock-Verbindung und mit einem vierten Wischarm 18 mit einem Verbindungselement 26 ebenfalls für eine Toplock-Verbindung. Die Verbindungselemente 20, 22, 24, 26 können einstückig an den Wischarmen 12, 14, 16, 18 angeformt oder als separate Bauteile mit diesen fest verbunden sein.

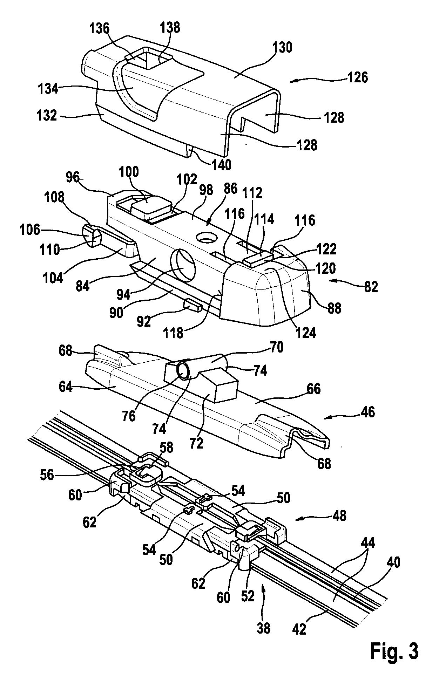

Die Anschlussvorrichtung 10 ist in Fig. 3 detaillierter mit einem Wischblatt 38 dargestellt, von dem, so weit es für das Verständnis der Erfindung erforderlich ist, nur ein Tragelement 44 in Form zweier Federschienen gezeigt ist, das eine Wischleiste an seiner Kopfleiste 40 hält. Die Wischleiste besitzt ebenfalls eine Wischlippe 42, die über einen nicht sichtbaren Kippsteg mit der Kopfleiste 40 verbunden ist.

Auf dem Tragelement 44 sitzt ein Grundelement 48, das in Längsrichtung in zwei Seitenteile 50 geteilt ist und mit Längsnuten 52 das Tragelement 44 seitlich umfasst. Die Seitenteile 50 werden durch Rasthaken 56 zusammengehalten, die jeweils in einem Endbereich eines Seitenteils 50 angeordnet sind und mit Rastvertiefungen 58 des anderen Seitenteils komplementär zusammenwirken. An den außen liegenden Ecken des Grundelements 48 sind Verstärkungen 60 vorgesehen, in den seitliche, in Längsrichtung einander zugewandte Nischen 62 vorgesehen sind, die zur Befestigung eines Anschlussteils 46 dienen.

Das Anschlussteil 46, das in der Ausführung nach Fig. 3 aus Kunststoff in einem Spritzgussverfahren hergestellt ist, besitzt Seitenwände 64, die durch eine Deckwand 66 miteinander verbunden sind. An den Stirnseiten sind ferner Anschlussprofile 68 für nicht dargestellte Spoilerteile angeformt. An der Außenseite der Deckwand 66 ist ein in Längsrichtung ausgerichteter Gelenkteilträger 72 angeformt, der einstückig mit einem im Wesentlichen zylindrischen Gelenkteil 70 verbunden ist. Das Gelenkteil 70 hat die Form eines Lagerbolzens mit einer Lagerbohrung 76, wobei das Gelenkteil 70 an den Seiten des Gelenkteilträgers 72 jeweils einen Überstand 74 aufweist. Auf den Überständen 74 ist ein Adapter 82 mittels Lageröffnungen 94 schwenkbar gelagert. Diese befinden sich in Seitenwänden 84 des Adapters, die durch eine Deckwand 86, eine Frontwand 88 und einen Steg 96 miteinander verbunden sind. Die Frontwand 88 ist bis in den Bereich der Seitenwände 84 geführt und bildet zu den Seitenwänden 84 und zur Deckwand 86 einen Absatz 118. Die Frontwand 88 besitzt im Bereich der Deckwand 86 eine Aussparung 120, die durch eine Kante 122 begrenzt ist.

Ein Teil der Deckwand 86 ist als Federzunge 112 ausgebildet, die an ihrem zur Aussparung 120 gerichteten Ende ein Füllstück 114 trägt, das in die Aussparung 120 hineinragt und mit dem Absatz 118 abschließt. Am gegenüberliegenden Ende der Deckwand 86 befindet sich eine Taste 100, die über eine Federzunge 98 mit dem Adapter 82 verbunden ist und über die Deckwand 86 vorsteht. An der zur Frontwand 88 weisenden Seite besitzt die Taste 100 eine Hohlkehle 102.

An der unteren Kante der Seitenwände 84 des Adapters 82 sind seitlich vorstehende Führungsschienen 90 angeformt, an denen in Längsrichtung wirkende Anschläge 92 vorgesehen sind.

Zum antriebsseitigen Ende besitzt der Adapter 82 einen Federbügel 104, der mit der Taste 100 gekoppelt sein kann, sodass er in Abhängigkeit von der Stellung der Taste 100 seine Lage verändert. Im Bereich des Federbügels 104 sind die Seitenwände 84 entsprechend zurückgenommen. Der Federbügel 104 besitzt zum antriebsseitigen Ende hin seitlich vorstehende Rastnocken 106, die eine erste Anschlagfläche 110 und daran anschließend eine zweite Anschlagfläche 108 besitzen. Die beiden Anschlagflächen 108, 110 sind dem Absatz 118 der Frontwand 88 zugewandt, wobei die eine Anschlagfläche 110 unter einem spitzen Winkel geneigt zum Tragelement 44 verläuft, während die andere Anschlagfläche 108 etwa senkrecht zum Tragelement 44 gerichtet ist. Die Anschlussvorrichtung 10 kann optional eine Adapterkappe 126 besitzen. Diese ist zweckmäßig, wenn die Anschlussvorrichtung 10 mit einem ersten Wischarm 12 nach dem Sidelock-Prinzip kombiniert werden soll. Die Adapterkappe 126 besitzt zwei Seitenwände 128, die durch eine Deckwand 130 miteinander verbunden sind. An die freien Längskanten der Seitenwände 128 sind Führungsschienen 132 angeformt, mit denen die Adapterkappe 126 an den Führungsschienen 90 des Adapters 82 geführt ist und an den Anschlägen 92 anliegen. In Längsrichtung wird die Adapterkappe 126 durch die Taste 100 gesichert, die in eine Rastöffnung 136 in der Deckwand 130 eingreift und mit ihrer Hohlkehle 102 an der Vorderkante 138 der Rastöffnung 136 verrastet. In einer der Seitenwände 128 befindet sich eine Nische 134, während in der gegenüberliegenden Seitenwand 128 eine Lageröffnung 142 vorgesehen ist.

Die Anschlussvorrichtung 110 wird montiert, indem das Anschlussteil 146 auf das vormontierte Grundelement 48 in Richtung eines Pfeils 144 aufgesteckt wird. Dabei greifen Rastnocken 80 an den Innenseiten der Seitenwände 64 des Anschlussteils 46 in die Nischen 62 an den Außenseiten des Grundelements 48. In Längsrichtung wird das Anschlussteil 46 durch eine Zentrierung 78 an der Innenseite der Deckwand 66 zentriert, die mit Zentriernocken 54 am Grundelement 48 zusammenwirkt. Danach wird der Adapter 82 mit seinen Lageröffnungen 94 auf die Überstände 74 des Gelenkteils geklippst. Anschließenden wird die Adapterkappe 126 aufgesetzt.

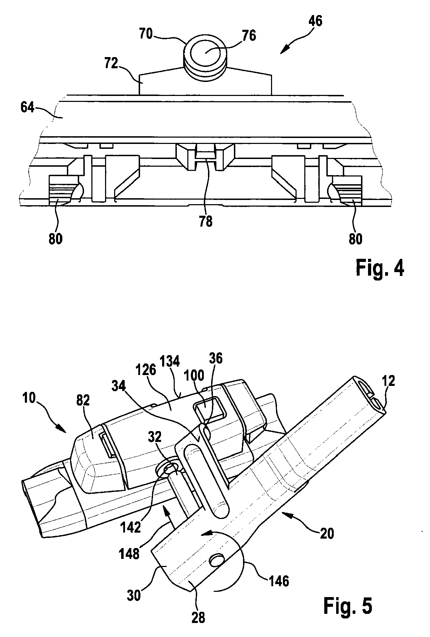

Das so vormontierte Wischblatt wird mit dem ersten Wischarm 12 verbunden, indem dieser in Richtung eines Pfeils 146 (Fig. 5) relativ zum Wischblatt 38 verschwenkt wird und dann in Richtung des Pfeils 148 bewegt wird. Dabei wird der seitlich am Verbindungselement 20 angebrachte Gelenkstift 32 durch die Lageröffnung 142 in der Seitenwand der Adapterkappe 126 in die Lagerbohrung 76 des Gelenkteils 70 des Anschlussteils 46 geführt. Beim Zurückschwenken des ersten Wischarms 12 greift ein abgewinkeltes Ende 36 einer Brücke 34 des Verbindungselements 20 in die Nische 134 der Adapterkappe 126, sodass das Wischblatt 38 in Längsrichtung des Gelenkstifts 32 relativ zum Wischarm 12 gesichert ist.

Für die Montage des zweiten Wischarms 14 mit der Anschlussvorrichtung 10 entfällt die Adapterkappe 126. Das Ende des Wischarms 14 bzw. des Verbindungselements 22 besitzt zwei Seitenwände 150, die durch eine Deckwand 156 miteinander verbunden sind. In dieser befindet sich eine Rastöffnung 158, die mit ihrer Vorderkante in der Hohlkehle 102 der Taste 100 verrastet, wenn das Verbindungselement 22 in Richtung eines Pfeils 164 auf den Adapter geschoben wird. An den unteren Rändern der Seitenwände 150 befinden sich nach innen vorstehende Kanten 152, deren Stirnseiten 154 im montierten Zustand an den Anschlägen 92 des Adapters 82 anliegen, während die Kanten 152 unter die Führungsschienen 90 des Adapters 82 greifen. Das Verbindungselement 22 besitzt zum Wischarm 14 hin eine Kröpfung 162, sodass der Wischarm 14 im Wesentlichen seitlich parallel zum Wischblatt 38 verläuft.

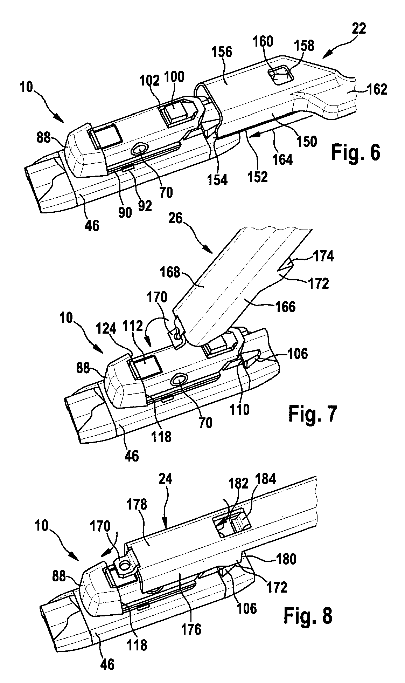

Die Montage des vierten Wischarms 18 mit seinem Verbindungselement 26 ist in Fig. 7 dargestellt. Das Verbindungselement besitzt zwei Seitenwände 166, die durch eine Deckwand 168 miteinander verbunden sind. Zum antriebsseitigen Ende hin versetzt besitzen die Seitenwände 72 zum Tragelement 44 hin Vorsprünge 172, die zum antriebsseitigen Ende hin Hinterschneidungen 144 aufweisen. An der Stirnseite der Deckwand 168 ist eine Lasche 170 angeformt, die zum Tragelement 44 hin gekröpft verläuft. Bei der Montage wird die Federzunge 112 mit dem Füllstück 124 durch die Lasche 170 zurückgedrückt, sodass die Lasche 170 unter die Stützwand 124 gelangt und zum Teil in der Aussparung 120 Platz findet. Beim Zurückschwenken des Wischblatts in die Betriebsposition wird der Adapter 82 am Verbindungselement 26 fixiert, indem die Hinterschneidungen 174 mit den Anschlagflächen 110 der Rastnocken 106 des Adapters 82 zusammenwirken.

Der dritte Wischarm 16 besitzt ein Verbindungselement 24 mit zwei Seitenwänden 76, die durch eine Deckwand 178 miteinander verbunden sind. Die Seitenwände 176 besitzen ähnlich wie die Seitenwände 166 des Verbindungselements 26 Vorsprünge 172, deren zur Antriebsseite weisende Flanken 180 jedoch etwa senkrecht zum Tragelement 44 verlaufen. Die Flanken 180 wirken in montiertem Zustand mit Anschlagflächen 108 der Rastnocken 106 zusammen, die im Wesentlichen eine gleiche Neigung zu dem Tragelement 44 haben wie die Flanken 180. Das Verbindungselement 24 besitzt an seiner Stirnseite ebenfalls eine zum Tragelement 44 hin gekröpfte Lasche 170, mit der die Federzunge 112 zurückgedrückt wird und die unter die Stützwand 124 gleitet.

Das Verbindungselement 24 besitzt in seiner Deckwand 178 eine Öffnung 182, an deren antriebsseitigen Kante eine Lasche 184 angeformt ist, die nach innen gekröpft ist, sodass sie bei der Montage in Längsrichtung unter einen Steg 96 im Bereich der Taste 100 greift. Gleichzeitig rastet die Taste 100 mit ihrer Hohlkehle an der Vorderkante der Öffnung 182 ein.

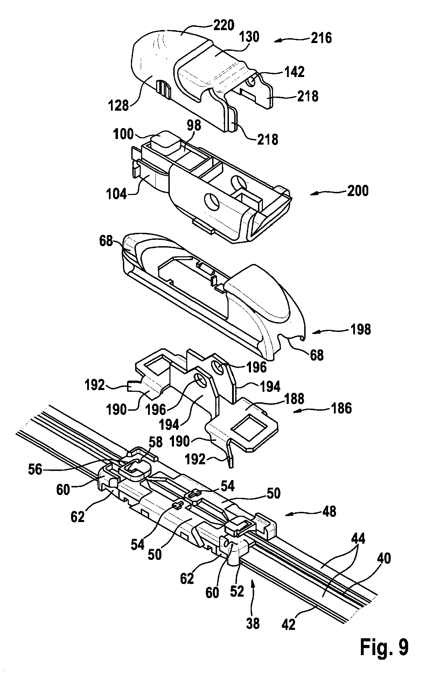

Die Variante nach Fig. 9 unterscheidet sich von dem bisher beschriebenen Ausführungsbeispiel im Wesentlichen dadurch, dass mit dem Grundelement 48 ein Anschlussteil 186 in Form einer Blechkralle verbunden ist. Diese besitzt einen Boden 188, von dem aus zum Grundelement 48 hin Füße 190 umgebogen sind, die die Seitenteile 50 seitlich umfassen. An den Füßen 190 sind in Längsrichtung zu den Enden hin Laschen 192 angeformt, die im montierten Zustand in die Nischen 62 in den Seitenteilen 50 passen. Zwischen den Füßen 190 sind entgegensetzt zu diesen vom Boden aus Seitenwände 194 abgebogen, in denen Öffnungen 196 zur Aufnahme des Gelenkteils 70 vorgesehen sind. Die Seitenwände 194 dienen somit als Gelenkteilträger und sind in ihrem Abstand wie der Gelenkteilträger 72 in der Breite auf den Abstand der Seitenwände 84 des Adapters 82 oder eines Adapters 200 abgestimmt, sodass dieser an den Innenseiten seiner Seitenwände durch die Außenseiten der Seitenwände 1 des 94 geführt ist. Das Grundelement 48 und das Anschlussteil 186 sind aus Designgründen zweckmäßigerweise durch eine Verkleidung 198 abgedeckt, die an ihren Stirnseiten Anschlussprofile 68 für nicht dargestellte Spoilerteile besitzt.

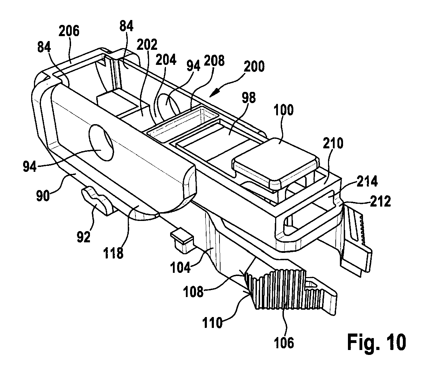

Der Adapter 200, der im Wesentlichen gleich aufgebaut ist wie der Adapter 82, ist in Fig. 10 vergrößert dargestellt. Um Wiederholungen zu vermeiden, werden lediglich die Unterschiede herausgestellt. So besitzt der Adapter 200 im Bereich der Frontseite einen ersten Quersteg 206, der die Aussparung 120 bildet, im mittleren Bereich einen zweiten Quersteg 208 und an seinem antriebsseitigen Ende im Bereich der Taste 100 einen dritten Quersteg 210 und einen vierten Quersteg 212. Dieser verläuft gegenüber dem dritten Quersteg 210 etwas versetzt zum Tragelement 44 hin, sodass die Lasche 170 des dritten Wischarms 116 in eine Lücke 214 zwischen dem dritten Quersteg 210 und dem vierten Quersteg 212 eingreifen kann und sich am dritten Quersteg 210 abstützt. Ferner besitzt der Adapter 200 zwischen den Lageröffnungen 94 eine Lagerschale 202 für das Gelenkteil 70. Die Lagerschale 202 bildet zur Seitenwand 84 des Adapters einen Spalt 204 für den Durchgang der Seitenwände 194 des Anschlussteils 186. Das Gelenkteil 70 wird erst montiert, wenn das Grundelement 48, das Anschlussteil 186, die Verkleidung 198 und der Adapter 200 montiert bzw. vormontiert sind.

Zum Anschluss eines ersten Wischarms 12 ist eine Adapterkappe 216 vorgesehen, deren Seitenwände 128 durch eine Deckwand 130 miteinander verbunden sind. Die Adapterkappe 216 schließt an die Verkleidung 198 an und greift mit Flügel 218 an den Stirnseiten ihrer Seitenwände 128 in die Verkleidung 198 ein. Im Bereich der Taste 100 des Adapters 200 besitzt die Adapterkappe 216 eine Ausbuchtung 220, sodass sich nach der Montage der Adapterkappe 216 ein geschlossenes Design ergibt. Die Wischarme 12, 14, 16, 18 können in der gleichen Weise montiert werden, wie sie im Zusammenhang mit dem vorhergehenden Ausführungsbeispiel beschrieben wurden.

## Patentansprüche

1. Anschlussvorrichtung (10) zum gelenkigen Verbinden eines Wischblatts (38) mit einem Wischarm (12, 14, 16, 18), wobei die Anschlussvorrichtung (10) ein mit einem Tragelement (44) des Wischblatts (38) fest verbundenes Anschlusselement (46, 48, 186) besitzt, das ein Grundelement (48) und ein Anschlussteil (46, 186) umfasst, das einen in Längsrichtung verlaufenden Gelenkteilträger (72, 194) aufweist, der einen Adapter (82, 200) an den Innenseiten seiner Seitenwände (84) seitlich führt und ein quer gerichtetes Gelenkteil (70) trägt, das auf jeder Seite des Gelenkteilträgers (72, 194) ein Stück vorsteht, auf dem der Adapter (82, 200) schwenkbar gelagert ist, der an dem freien Ende des Wischarms (12, 14, 16, 18) bzw. an einem mit diesem fest verbundenen Verbindungselement (20, 22, 24, 26) lösbar befestigt werden kann und an seinem zum Antrieb weisenden Ende einen Federbügel (104) besitzt, der an seinen nach außen weisenden Seitenflächen vorspringende Rastnocken (106) aufweist, die zum freien Ende weisende Anschlagflächen (110) besitzen, die mit dem Tragelement (44) spitze Winkel einschließen, während am freien Ende die Seitenwände (84) Absätze (118) haben, die mit einem Steg (121, 206) eine Aussparung (120) bilden, wobei der Adapter (82, 200) an seinem antriebseitigen Ende oberhalb des Federbügels (104) eine Taste (100) besitzt, die über eine Federzunge (98) mit dem Adapter (82, 200) verbunden ist und über die oberen Kanten der Seitenwände (84) vorsteht, **dadurch gekennzeichnet, dass** die Seitenwände (84) an ihren unteren Rändern jeweils eine vorstehende Führungsschiene (90) besitzen, an der ein Anschlag (92) vorgesehen ist.

2. Anschlussvorrichtung (10) nach Anspruch 1, **dadurch gekennzeichnet, dass** die Taste (100) zum freien Ende des Adapters (82, 200) hin eine Hohlkehle (102) besitzt.

3. Anschlussvorrichtung (10) nach einem der vorhergehenden Ansprüche, **dadurch gekennzeichnet, dass** die Rastnocken (106) jeweils zwei Anschlagflächen (108, 110) besitzt, von denen die dem Tragelement (44) zugewandte, erste Anschlagfläche (110) unter einem spitzen Winkel geneigt zu diesem verläuft, während die zweite Anschlagfläche (108) sich an die erste Anschlagfläche (110) anschließt und etwa senkrecht zum Tragelement (44) verläuft.

4. Anschlussvorrichtung (10) nach einem der vorhergehenden Ansprüche, **dadurch gekennzeichnet, dass** der Adapter (82, 200) zu seinem freien Ende hin eine Federzunge (112) aufweist, an deren freiem Ende ein Füllstück (114) vorgesehen ist, mit dem sie in die Aussparung (122) ragt.

5. Anschlussvorrichtung (10) nach einem der vorhergehenden Ansprüche, **dadurch gekennzeichnet, dass** das Gelenkteil (70) ein Lagerbolzen mit einer Lagerbohrung (76) ist.

6. Anschlussvorrichtung (10) nach Anspruch 5, **dadurch gekennzeichnet, dass** das Anschlussteil (46) aus Kunststoff gefertigt ist und dass an der Außenseite seiner Deckwand (66) ein Gelenkteilträger (72) angeformt ist, wobei das Gelenkteil (70) einstückig an dem Gelenkteilträger (72) angeformt ist und an seinen Enden Überstände (74) aufweist.

7. Anschlussvorrichtung (10) nach Anspruch 6, **dadurch gekennzeichnet, dass** das Anschlussteil (46) an den Innenseiten seiner Seitenwände (64) Rastnocken (80) besitzt, die in Nischen (62) an den Außenseiten der Seitenteile (50) des Grundelements (48) passen.

8. Anschlussvorrichtung (10) nach einem der Ansprüche 6 oder 7, **dadurch gekennzeichnet, dass** an den Stirnseiten des Anschlussteils (10) Anschlussprofile (68) für Spoilerteile vorgesehen sind.

9. Anschlussvorrichtung (10) nach einem der vorhergehenden Ansprüche, **dadurch gekennzeichnet, dass** der Adapter (82, 200) eine Adapterkappe (126) besitzt, die an dem Absatz (118) anschließt und mindestens in einer Seitenwand (128) eine Nische (134) besitzt, während in der anderen Seitenwand (128) eine Lageröffnung (142) vorgesehen ist.

10. Anschlussvorrichtung (10) nach einem der vorhergehenden Ansprüche, **dadurch gekennzeichnet, dass** das Grundelement (48) in Längsrichtung geteilt ist und die Seitenteile (50) mit ihren einander zugewandte Längsnuten (52) auf dem Tragelement (44) sitzen, wobei das Anschlussteil (46) die Seitenteile (50) seitlich umfasst und zusammenhält.

11. Anschlussvorrichtung (10) nach Anspruch 10, **dadurch gekennzeichnet, dass** die Seitenteile (50) im Bereich ihrer Enden jeweils durch einen Rasthaken (56) zusammengehalten werden, der in eine Rastvertiefung (58) des anderen Seitenteils (50) eingreift.

12. Anschlussvorrichtung (10) nach einem der Ansprüche 1 bis 5 und 9 bis 11, **dadurch gekennzeichnet, dass** das Anschlussteil (200) als Blechkralle ausgebildet ist, die mit ihren Füßen (190) das Grundelement (48) seitlich umfasst und mit in Längsrichtung zu den Enden des Anschlussteils (200) gerichteten Laschen (192) in die Nischen (62) an den Außenseiten des Grundelements (48) eingreift.

13. Anschlussvorrichtung (10) nach Anspruch 12, **dadurch gekennzeichnet, dass** das Anschlussteil (200) zwei parallel in Längsrichtung verlaufende Seitenwände (194) besitzt, in deren Öffnungen (196) das Gelenkteil (70) eingesetzt ist und zu beiden Seiten ein Stück weit vorsteht.

14. Anschlussvorrichtung (10) nach Anspruch 12, **dadurch gekennzeichnet, dass** auf das Grundelement (48) oder das Anschlussteil (200) eine Verkleidung (198) geklippst ist, die an ihren Stirnseiten Anschlussprofile (68) für Spoilerteile aufweist.

15. Anschlussvorrichtung (10) nach Anspruch 14, **dadurch gekennzeichnet, dass** sie eine Adapterkappe (216) umfasst, die an einer Seitenwand (128) eine Nische (134) besitzt, während in der anderen Seitenwand (128) eine Lageröffnung (142) vorgesehen ist.

16. Anschlussvorrichtung (10) nach Anspruch 14 oder 15, **dadurch gekennzeichnet, dass** die Adapterkappe (216) an der zum freien Ende hinweisenden Stirnseite Flügel (218) hat, die in die Verkleidung (198) eingreifen.

17. Anschlussvorrichtung (10) nach einem der Ansprüche 14 bis 16, **dadurch gekennzeichnet, dass** die Adapterkappe (216) im Bereich der Taste (100) eine Ausbuchtung (220) besitzt.

## Claims

1. Connection device (10) for connecting a wiper blade (38) in an articulated manner to a wiper arm (12, 14, 16, 18), wherein the connection device (10) has a connection element (46, 48, 186) which is fixed to a carrying element (44) of the wiper blade (38) and comprises a basic element (48) and a connection part (46, 186), which has a longitudinally running articulation-part carrier (72, 194) which guides an adapter (82, 200) laterally on the inner sides of its side walls (84) and carries a transversely directed articulation part (70) which projects some way on either side of the articulation-part carrier (72, 194), on which is mounted in a pivotable manner the adapter (82, 200), which can be fastened in a releasable manner at the free end of the wiper arm (12, 14, 16, 18), or on a connecting element (20, 22, 24, 26) fixed thereto, and, at its end which is oriented in the direction of the drive, has a resilient clip (104) which has latching protuberances (106) which project on its outwardly oriented side surfaces and have stop surfaces (110) which are oriented in the direction of the free end and enclose acute angles with the carrying element (44), whereas, at the free end, the side walls (84) have shoulders (118) which form a cutout (120) by way of a crosspiece (121, 206), wherein the adapter (82, 200) has a button (100) at its drive end, above the resilient clip (104), this button being connected to the adapter (82, 200) by a resilient tongue (98) and projecting beyond the upper edges of the side walls (84), **characterized in that** the side walls (84), on their lower peripheries, each have a projecting guide rail (90), on which a stop (92) is provided.

2. Connection device (10) according to Claim 1, **characterized in that** the button (100) has a hollow channel (102) in the direction of the free end of the adapter (82, 200).

3. Connection device (10) according to one of the preceding claims, **characterized in that** the latching protuberances (106) each have two stop surfaces (108, 110), of which the first stop surface (110), which is directed towards the carrying element (44), is inclined at an acute angle in relation to the carrying element, whereas the second stop surface (108) adjoins the first stop surface (110) and runs approximately perpendicularly to the carrying element (44).

4. Connection device (10) according to one of the preceding claims, **characterized in that** the adapter (82, 200), in the direction of its free end, has a resilient tongue (112), at the free end of which is provided a filler piece (114) by way of which it projects into the cutout (122).

5. Connection device (10) according to one of the preceding claims, **characterized in that** the articulation part (70) is a bearing bolt with a bearing bore (76).

6. Connection device (10) according to Claim 5, **characterized in that** the connection part (46) is produced from plastics material, and **in that** an articulation-part carrier (72) is formed on the outer side of its top wall (66), wherein the articulation part (70) is formed in one piece on the articulation-part carrier (72) and has projections (74) at its ends.

7. Connection device (10) according to Claim 6, **characterized in that** the connection part (46), on the inner sides of its side walls (64), has latching protuberances (80) which fit into niches (62) on the outer sides of the side parts (50) of the basic element (48).

8. Connection device (10) according to either of Claims 6 and 7, **characterized in that** connection profiles (68) for spoiler parts are provided on the end sides of the connection part (10).

9. Connection device (10) according to one of the preceding claims, **characterized in that** the adapter (82, 200) has an adapter cap (126) which adjoins the shoulder (118) and has a niche (134) at least in one side wall (128), whereas a bearing opening (142) is provided in the other side wall (128).

10. Connection device (10) according to one of the preceding claims, **characterized in that** the basic element (48) is divided in the longitudinal direction and the side parts (50) are seated on the carrying element (44) by way of their mutually facing longitudinal grooves (52), wherein the connection part (46) laterally encloses, and holds together, the side parts (50).

11. Connection device (10) according to Claim 10, **characterized in that** the side parts (50), in the region of their ends, are held together in each case by a latching hook (56), which engages in a latching depression (58) of the other side part (50).

12. Connection device (10) according to one of Claims 1 to 5 and 9 to 11, **characterized in that** the connection part (200) is designed as a sheet-metal claw which, by way of its feet (190), laterally encloses the basic element (48) and, by way of lugs (192) directed longitudinally towards the ends of the connection part (200), engages in the niches (62) on the outer sides of the basic element (48).

13. Connection device (10) according to Claim 12, **characterized in that** the connection part (200) has two side walls (194) which run parallel in the longitudinal direction and in the openings (196) of which the articulation part (70) is inserted and projects some way on either side.

14. Connection device (10) according to Claim 12, **characterized in that** the basic element (48) or the connection part (200) has clipped onto it a cladding (198), which has connection profiles (68) for spoiler parts on its end sides.

15. Connection device (10) according to Claim 14, **characterized in that** it comprises an adapter cap (216) which has a niche (134) on one side wall (128), whereas a bearing opening (142) is provided in the other side wall (128).

16. Connection device (10) according to Claim 14 or 15, **characterized in that** the adapter cap (216), on the end side which is oriented in the direction of the free end, has wings (218) which engage in the cladding (198).

17. Connection device (10) according to one of Claims 14 to 16, **characterized in that** the adapter cap (216) has a convexity (220) in the region of the button (100).

## Revendications

1. Dispositif de raccordement (10) permettant de relier de manière articulée un balai d'essuie-glace (38) à un bras d'essuie-glace (12, 14, 16, 18), le dispositif de raccordement (10) possédant un élément de raccordement (46, 48, 186) relié solidairement à un élément de support (44) du balai d'essuie-glace (38), l'élément de raccordement comportant un élément de base (48) et une partie de raccordement (46, 186) qui présente une partie articulée de support (72, 194) qui s'étend dans le sens de la longueur, qui guide latéralement un adaptateur (82, 200) sur les côtés intérieurs de ses parois latérales (84) et qui porte une partie articulée (70) orientée transversalement et portant sur chaque côté de la partie articulée de support (72, 194) une pièce sur laquelle l'adaptateur (82, 200) est monté à pivotement, la partie articulée de support pouvant être fixée de manière libérable sur l'extrémité libre du bras d'essuie-glace (12, 14, 16, 18) et sur un élément de liaison (20, 22, 24, 26) relié solidairement à ce bras et possédant sur son extrémité tournée vers l'entraînement un étrier élastique (104) qui présente sur ses surfaces latérales tournées vers l'extérieur des boutons d'encliquetage (106) en saillie qui possèdent des surfaces de butée (110) qui sont tournées vers l'extrémité libre et qui forment des angles aigus avec l'élément de support (44), tandis qu'à l'extrémité libre, les parois latérales (84) présentent des retraits (118) qui forment une découpe (120) avec une nervure (121, 206), l'adaptateur (82, 200) possédant à son extrémité située du côté de l'entraînement et au-dessus de l'étrier élastique (104) une touche (100) qui est reliée à l'adaptateur (82, 200) par l'intermédiaire d'une lamelle élastique (98) et qui déborde au-delà du bord supérieur de la paroi latérale (84), **caractérisé en ce que** sur chacun de leurs bords inférieurs, les parois latérales (84) présentent au moins un rail de guidage (90) en saillie sur lequel une butée (92) est prévue.

2. Dispositif de raccordement (10) selon la revendication 1, **caractérisé en ce que** la touche (100) possède un biseau creux (102) orienté vers l'extrémité libre de l'adaptateur (82, 200).

3. Dispositif de raccordement (10) selon l'une des revendications précédentes, **caractérisé en ce que** les boutons d'encliquetage (106) possèdent chacun deux surfaces de butée (108, 110) dont la première surface de butée (110) tournée vers l'élément de support (44) est orientée obliquement sous un angle aigu par rapport à ce dernier, tandis que la deuxième surface de butée (108) se raccorde à la première surface de butée (110) et s'étend sensiblement à la perpendiculaire de l'élément de support (44).

4. Dispositif de raccordement (10) selon l'une des revendications précédentes, **caractérisé en ce que** l'adaptateur (82, 200) présente vers son extrémité libre une lamelle élastique (112) à l'extrémité libre de laquelle est prévue une pièce de remplissage (114) par laquelle elle pénètre dans la découpe (122).

5. Dispositif de raccordement (10) selon l'une des revendications précédentes, **caractérisé en ce que** la partie articulée (70) est un goujon de palier associé à alésage de palier (76).

6. Dispositif de raccordement (10) selon la revendication 5, **caractérisé en ce que** la partie de raccordement (46) est réalisée en matière synthétique et **en ce qu'**une partie articulée de support (72) est formée sur le côté extérieur de sa paroi de recouvrement (66), la partie articulée (70) étant formée d'un seul tenant sur la partie articulée de support (72) et présentant des débords (74) à ses extrémités.

7. Dispositif de raccordement (10) selon la revendication 6, **caractérisé en ce que** sur les côtés intérieurs de ses parois latérales (64), la partie de raccordement (46) possède des boutons d'encliquetage (80) qui s'adaptent dans des niches (62) prévues sur les côtés extérieurs des parties latérales (50) de l'élément de base (48).

8. Dispositif de raccordement (10) selon l'une des revendications 6 ou 7, **caractérisé en ce que** des profilés de raccordement (68) pour des parties de béquet sont prévus sur les côtés frontaux de la partie de raccordement (10).

9. Dispositif de raccordement (10) selon l'une des revendications précédentes, **caractérisé en ce que** l'adaptateur (82, 200) possède un capuchon d'adaptateur (126) qui se raccorde au retrait (118) et qui possède une niche (134) au moins dans une paroi latérale (128), une ouverture de palier (142) étant prévue dans l'autre paroi latérale (128).

10. Dispositif de raccordement (10) selon l'une des revendications précédentes, **caractérisé en ce que** l'élément de base (48) est divisé dans le sens de sa longueur et **en ce que** les parties latérales (50) sont posées sur l'élément de support (44) par leurs rainures longitudinales (52) tournées l'une vers l'autres, la partie de raccordement (46) chevauchant latéralement et maintenant ensemble les parties latérales (50).

11. Dispositif de raccordement (10) selon la revendication 10, **caractérisé en ce que** les parties latérales (50) sont maintenues au niveau de chacune de leurs extrémités par un crochet d'encliquetage (56) qui engage un creux d'encliquetage (58) de l'autre partie latérale (50).

12. Dispositif de raccordement (10) selon l'une des revendications 1 à 5 et 9 à 11, **caractérisé en ce que** la partie de raccordement (200) est configurée comme griffe en tôle dont les pieds (190) saisissent latéralement l'élément de base (48) et dont des pattes (192) orientées vers les extrémités de la partie de raccordement (200) dans le sens de la longueur s'engagent dans les niches (62) prévues sur les côtés extérieurs de l'élément de base (48).

13. Dispositif de raccordement (10) selon la revendication 12, **caractérisé en ce que** la partie de raccordement (200) possède deux parois latérales (194) parallèles qui s'étendent dans le sens de la longueur, la partie articulée (70) étant insérée dans leurs ouvertures (196) et débordant légèrement des deux côtés.

14. Dispositif de raccordement (10) selon la revendication 12, **caractérisé en ce qu'**un habillage (198) qui présente sur ses côtés frontaux des profilés de raccordement (68) pour des parties de béquet est encliqueté sur l'élément de base (48) ou sur la partie de raccordement (200).

15. Dispositif de raccordement (10) selon la revendication 14, **caractérisé en ce qu'**il comporte un capuchon d'adaptateur (216) qui possède sur une paroi latérale (128) une niche (134), une ouverture de palier (142) étant prévue dans l'autre paroi latérale (128).

16. Dispositif de raccordement (10) selon la revendication 14 ou 15, **caractérisé en ce que** le capuchon d'adaptateur (216) possède des ailes (218) orientées vers l'extrémité libre et qui s'engagent dans l'alliage (198).

17. Dispositif de raccordement (10) selon l'une des revendications 14 à 16, **caractérisé en ce que** le capuchon d'adaptateur (216) possède une entaille (220) au niveau de la touche (100).
